**Europäisches Patentamt**

**European Patent Office**

**Office européen des brevets**

(19)

(11) **EP 1 508 985 A1**

(12) **EUROPEAN PATENT APPLICATION**

(43) Date of publication:
**23.02.2005 Bulletin 2005/08**

(51) Int Cl.$^7$: **H04B 10/17**

(21) Application number: **03292070.4**

(22) Date of filing: **22.08.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Charlet, Gabriel**<br>**91190 Villiers-Le-Bacle (FR)**<br>• **Martinelli, Catherine**<br>**91120 Palaiseau (FR)** |
| (71) Applicant: **ALCATEL**<br>**75008 Paris (FR)** | (74) Representative: **Brose, Gerhard et al**<br>**Alcatel,**<br>**Intellectual Property Department Stuttgart**<br>**70430 Stuttgart (DE)** |

(54) **Gain monitor in a distributed raman amplifier**

(57)    In order to determine the actual on-off gain of a Roman amplifier (RA) in a fiber optical communication system, a low frequency signal modulation is applied to the Raman pump beam. A corresponding intensity modulation is then measured at the signal beam and the on-off Raman gain is determined from this detected intensity modulation. The Roman optical amplifier (RA) contains a pump light source (LD) coupled to a fiber (F) of the communication system to launch a pump light signal into said fiber for amplifying an optical signal traversing said fiber (F) by stimulated Roman amplification. A low-frequency modulator (MO) is coupled to said pump light source (LD) for applying a low frequency intensity modulation to said pump light signal. A detector (PD) detects a corresponding low frequency amplitude modulation in said signal traversing said optical fiber (F). A controller dynamically determines a parameter of amplification of said optical amplifier (RA).

*Fig. 1*

## Description

### Field of the Invention

The invention relates to the field of optical fiber communication systems and more particularly to a method and apparatus for monitoring gain characteristics in a distributed Roman amplifier.

### Background of the Invention

In optical fiber communication systems, optical signals propagating along an optical fiber undergo signal attenuation due to absorption and scattering in optical fibers. Therefore, optical signals require periodic amplification over long distances, which can be performed either by electrical repeaters or by optical amplifiers. Known optical amplifiers include Erbium-doped fiber amplifiers (EDFAs), semiconductor optical amplifiers and Raman amplifiers. Raman amplifiers have gained increasing attention in the recent past as promising amplifier candidate for wavelength division multiplex (WDM) signal transmission, as they provide a low noise figure and also a flat gain over a wide signal wavelength band.

The Raman amplification process is based on the Raman effect, which is a non-linear optical process that only occurs at high optical intensities and involves coupling of light propagating through the non-linear medium to vibrational modes of the medium, and re-radiation of the light at a different wavelength. Re-radiated light upshifted in wavelength is commonly referred to as a Stokes line, whereas light downshifted in wavelength is referred to as an Anti-Stokes line. The Raman effect is described by quantum mechanics as scattering of photons at molecules which thereby undergo a transition of their vibrational state. Raman amplification involves stimulated Raman scattering, where the incident beam, having a higher optical frequency, often referred to as the pump beam, is used to amplify the lower frequency beam often referred to as the Stokes beam or the signal beam through the Raman effect.

In contrast to EDFAs, where the amplification properties are dependent only on the EDFA module, the transmission line itself is used as the gain medium of a Raman amplifier and thus, amplification properties such as gain and gain equalization are closely related to the type, properties and characteristics of the fiber used and the fiber condition. In a silica fiber for example, the strongest Raman scattering, i.e. the maximum Raman gain, occurs at a frequency shift of about 13.2 THz, which corresponds to a wavelength shift of about 50 - 100 nm for pump wavelengths between about 1 and 1.5 µm. It is therefore impossible to accurately predict the performance of a Raman amplifier, including gain, gain equalization and noise spectrum, without thorough knowledge of the fiber types, properties, characteristics, and condition along the fiber optic transmission line, which are potentially changing over time.

The Raman gain provided by distributed Raman amplification is difficult to measure in the field. For an EDFA this would be very easy, because the input signal power and the output signal power could easily be measured at the same location. This is, however, not possible with distributed Raman amplification since the input and the output ends of the fiber are typically 50 to 100 km apart. Distributed Raman amplification is rather characterized by the on-off gain, i.e., the ration of the signal power measured at the output end of the fiber when the pumps are on relative to the signal power when the pumps are off. A primary problem is to monitor the on-off gain during the life of a transmission system, given the evident fact that we cannot admit to switch the pumps on and off when the system is in service.

A preliminary calibration of the on-off Raman gain of various fibers as a function of the Raman pump power can be done before the transmission system is installed. In the field, the on-off Raman gain can then be deduced from the monitoring of the pump power. However, the Raman gain highly depends on the loss of the fiber which may vary with time due to aging and possible repairs. A local loss especially, can degrade the pump power and has a great impact on the Raman gain. Particularly, the position of this local loss of pump power influences the gain decrease. Preliminary calibration and monitoring of the pump power alone cannot take into account the local losses of the pump and changes of the link that occur during the life time of the system, neither. Consequently, such a method does not enable to monitor properly the on-off gain performed by the Raman pumps.

US 6,519,082 discloses a method of dynamically monitoring the on-off gain of a Raman amplifier using a probe signals outside the spectral range of the data signal. However, such off-band measurement cannot predict the gain characteristic within the spectral band accurately.

It is therefore an object of the present invention to provide a method and related apparatus for monitoring the on-off gain of a distributed Raman amplifier in operation.

### Summary of the Invention

These and other objects that appear below are achieved by applying a low frequency signal modulation to the pump beam. An intensity modulation is then measured at the signal beam and the on-off Raman gain is determined from this detected intensity modulation.

In particular, an optical amplifier for a fiber optical communication system contains a pump light source coupled to a fiber of a communication system to launch a pump light signal into said fiber for amplifying an optical signal traversing said fiber by stimulated Raman amplification. A low-frequency modulator is coupled to said pump light source for applying a low frequency intensity modulation to said pump light signal. A detector detects a corresponding low frequency amplitude modulation in said signal traversing said optical fiber. A controller dynamically determines a parameter of amplification of said optical amplifier.

The invention has the advantage that it allows a dynamic detection of the Raman gain characteristic over the lifetime of the system.

**Brief Description of the Drawings**

Preferred embodiments of the present invention will now be described with reference to the accompanying drawings in which

figure 1    shows a Raman amplifier in a first embodiment and

figure 2    shows a Raman amplifier in a second improved embodiment.

**Detailed Description of the Invention**

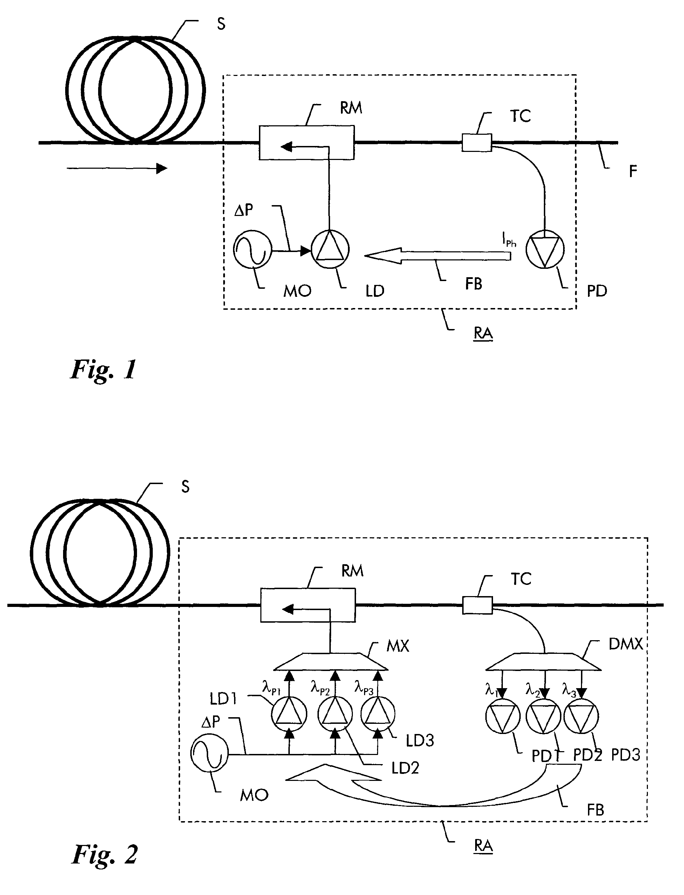

A first embodiment of the invention is shown in figure 1. A communication signal travels along a fiber link F. After a certain fiber span length S, the signal requires amplification. Therefore, a Raman amplifier RA is provided in the fiber link F. The Roman amplifier contains a pump source LD and a Raman multiplexer RM which couples the pump light from the pump source in backwards direction into the fiber link F. The pump light causes stimulated Raman scattering in the fiber span length S and thus amplifies the communication signal. The light source, however, must be controlled to adjust the pump light power to the required Raman gain. Such adjustment requires thorough knowledge of a parameter characteristic of the present Raman gain such as the on-off Raman gain. It would however be equally possible to describe the Raman gain by any other suitable parameter.

The basic principle of the present invention is to apply a low frequency intensity modulation with a frequency below 1 kHz to the Raman pumps. The frequency lies in a range between 5Hz and 1 kHz, preferably in a range between 100 and 500 Hz but could also be a very low frequency such as 10Hz or 50Hz. This modulation is transferred to the Raman gain (in dB) and thus to the signal (at the same frequency). The signal intensity modulation is measured with a low frequency photodiode PD located at the output of the Raman amplifier RA. The invention is based on the recognition that the amplitude of this modulation is linked to the Raman gain and the modulation depth applied on the Raman pumps. The Raman on-off gain of the link can thus be determined from the measured intensity modulation in the signal.

A low frequency modulator MO is connected to the pump light source PD. A tap coupler TC at the output of the Raman amplifier RA extracts a small fraction of the signal light from within the fiber and feeds it to photodiode PD, which generates a photo current $I_{PD}$. From this photo current, the on-off gain is calculated to determine therefrom a correction signal that acts as a feedback signal for the control of the laser diode LD. A controller that performs these measurements and calculations on the photo current is not shown in the figures, but from the below equations and description, those skilled in the art will be able to implement without undue experimentation a controller that performs these measurements and calculations.

In a preferred embodiment, the Raman pump can be a laser semiconductor laser diode and the intensity modulation of the pump can be performed by direct modulation of the current of the diode.

The on-off gain is determined according to the following relation, which links the amplitude of modulation of the signal to the Raman gain and the amplitude of modulation of the Raman pump. In a small signal regime, i.e. when the Roman pump depletion is negligible, which is the case for most Raman amplified links, and at low frequency modulation (since at high frequency, the modulation is no more sufficiently transferred to the signal) we can write:

$$\frac{\Delta G_{dB}}{G_{dB}} = \frac{\Delta P}{P} ,$$

where $G_{dB}$ corresponds to the on-off Raman gain expressed in dB and P corresponds to the pump power in mW. $\Delta G_{dB}$ and $\Delta P$ correspond to the change in Raman gain and pump power, respectively.

The signal intensity measured by the photodiode is denoted by $I_{ph}$ and its fluctuation by $\Delta I_{ph}$. Then the following relation holds:

$$\Delta G_{dB} = 10.\log(\frac{I_{ph} + \Delta I_{ph}}{I_{ph}}).$$

Assuming a relatively low amplitude of modulation of $I_{ph}$, we can then write

$$\Delta G_{dB} \approx \frac{10}{\ln(10)} \cdot \frac{\Delta I_{ph}}{I_{ph}} ,$$

where according to the relation given above,

$$\Delta G_{dB} = G_{dB} \frac{\Delta P}{P} .$$

$\Delta P$ and P are easily known as they are directly linked to the current flowing through the laser diode, and can also be monitored by an additional low frequency photodiode (not shown). The measurement of $\Delta I$ thus allows to determine the Raman on-off gain in dB.

The low frequency modulation of the pump transfers into an unwanted modulation of the signal at the output. This signal modulation can be reduced using an EDFA as a booster amplifier at the output of the Roman amplifier, i.e., an amplifier which operates in the saturation regime of amplification. The low frequency modulation (near 100Hz) is then cut by the EDFA.

In wavelength division multiplex (WDM) transmission systems, there are often more than one Raman pumps used, operating at different Raman pump wavelengths. When such a WDM Raman pumping scheme is used, the low frequency modulation of the first pump (i.e., the one with the lower wavelength), is transferred to the signal but also to the other Raman pump wavelengths. Thus the modulation on the signal is different from

$$\Delta I_{dB} = G_{dB} \frac{\Delta P}{P}$$

In this case, it is advantageous to apply time division multiplexing to the Raman pumps, i.e., by alternating the Raman pumps in time, in order to minimize any interaction between the Raman pumps and particularly to minimize the modulation transfer between the pumps. When for example a first Raman pump 1 is on, a second Raman pump is off and vice versa..

Alternatively or in addition thereto, it is advantageous to measure the fluctuation of multiple Raman pumps. This is demonstrated in a second advantageous embodiment, shown in figure 2. In order to measure the Raman gain shape in the case of a WDM pumping scheme with several Raman pump wavelengths, several signal wavelengths are measured in parallel. The number of signal wavelengths is preferably (but not necessarily) chosen to equal the number of pump wavelengths used in the pump source. An optical filter selects the wavelengths after the Raman amplifier and the signal power fluctuations are measured at these wavelengths in order to determine the Raman on-off gain at these wavelengths.

In the embodiment, the pump light source is contains three parallel laser diodes LD1-LD3, emitting pump wavelengths $\lambda_{P1}$-$\lambda_{P3}$. The output of the three laser diodes is fed to a multiplexer MX, which combines the pump light to a compound pump light signal that is coupled by Raman multiplexer RM in backwards direction into the fiber span S. A modulator MO applies a low frequency modulation signal to all three laser diodes that causes a gain modulation in the gain of the Raman amplifier.

The detector at the output side of the Raman amplifier contains a demultiplexer DMX, which servers to extract signal wavelengths $\lambda_1$-$\lambda_3$ (we are looking at the signal wavelengths and not at the pump wavelengths, because as explained in the outset, the signals wavelength are near 100nm away from the pump wavelengths) from the amplified data signal and feeds the three extracted wavelength signals to corresponding photodiodes PD1-PD3. Each photodiode generated a corresponding current signal that shows the gain modulation. It has to be noted that we are looking at the signal wavelengths here and not at the pump wavelengths, because as explained in the outset, the signals wavelengths are near 100nm away from the pump wavelengths.

From these three current signals, three feedback signals are determined, which are a base for determining the Raman gain spectrum and serve as feedback signals for the three laser diodes PD1 -PD3. Preferably, the three wavelengths $\lambda 1$, $\lambda 2$ and $\lambda 3$ are the Raman gain peak wavelengths.

DFB lasers in the transmitter at wavelengths $\lambda 1$, $\lambda 2$ and $\lambda 3$ can be used to extract these wavelengths at the demultiplexer to measure the on-off gain at these wavelengths and thus to determine the whole Raman gain shape.

**Claims**

1. An optical amplifier for a fiber optical communication system, said amplifier (RA) comprising a pump light source (LD) coupled to a fiber (F) of said communication system to launch a pump light signal into said fiber for amplifying an optical signal traversing said fiber (F) by stimulated Raman amplification, **characterized by**

   - a low-frequency modulator (MO) coupled to said pump light source (LD) for applying a low frequency intensity modulation to said pump light signal;
   - a detector (PD) for detecting a low frequency amplitude modulation in said signal traversing said optical fiber (F), and
   - a controller for dynamically determining a parameter of amplification of said optical amplifier (RA).

2. An amplifier according to claim 1, wherein said pump light source contains at least one laser diode (LD) directly modulated by said modulator (MO).

3. An amplifier according to claim 1, wherein said detector comprises a tap coupler (TC) for extracting a fraction of the signal light from the fiber (F) and at least one photodiode (PD) coupled to said tap coupler (TC) for generating a current signal from the extracted light signal.

4. An amplifier according to claim 3, wherein said pump source contains a number of laser diodes (LD1-LD3) emitting at different wavelengths ($\lambda_{P1}$-$\lambda_{P3}$) and being operated in time division multiplex operation.

**5.** An amplifier according to claim 1, wherein said pump light source contains multiple directly modulated laser diodes (LD1-LD3) emitting at different pump wavelengths ($\lambda_{P1}$-$\lambda_{P3}$) to amplify a wavelength division multiplex signal within a given wavelength spectrum.

**6.** An amplifier according to claim 5, wherein said detector comprises a demultiplexer (DMX) for extracting multiple single wavelength light signals at wavelengths ($\lambda_1$-$\lambda_3$) uphifted in wavelength as compared to the wavelengths ($\lambda_{P1}$-$\lambda_{P3}$) of the pump light source (LD1-LD3); and a number of photodiodes (PD1-PD3) coupled to said demultiplexer (DMX), each for receiving one of the single wavelength signals extracted by the demultiplexer (DMX).

**7.** An amplifier according to claim 1, wherein said parameter of amplification is used as a feedback signal to adjust the pump light power emitted by said pump light source (LD).

**8.** An amplifier according to claim 1, wherein said low-frequency modulation has a frequency of below 1 kHz and lies preferably in the range between 100Hz and 500Hz.

**9.** A fiber optic communication system comprising an optical fiber (F) and at least one optical amplifier (RA), said amplifier comprising a pump light source (LD) coupled to said fiber to launch a pump light signal into said fiber for amplifying an optical signal traversing said fiber (F) by stimulated Raman amplification,
**characterized by**

- a low-frequency modulator (MO) coupled to said pump light source (LD) for applying a low frequency intensity modulation to said pump light signal;
- a detector (PD) for detecting a low frequency amplitude modulation in said signal traversing said optical fiber (F), and
- a controller for dynamically determining a parameter of amplification of said optical amplifier (RA).

**10.** A system according to claim 9, further comprising at least one booster amplifier, preferably an Erbium-doped fiber amplifier, coupled to said fiber (F) following the Raman amplifier (RA) and operating in the saturation regime of amplification.

**11.** A method of determining a parameter of amplification of a Raman amplifier (RA) in a fiber optic communication system comprising an optical fiber (F); comprising the steps of

- launching a pump light signal into said fiber (F) for amplifying an optical signal traversing said fiber by stimulated Raman amplification;
- applying a low frequency intensity modulation to said pump light signal;
- detecting a low frequency amplitude modulation in said signal traversing said optical fiber (F);
- determining said parameter of amplification from the amplitude modulation in the signal traversing said fiber.

**12.** A method according to claim 11, wherein said parameter is the on-off Raman gain, which is characteristic of the Raman amplification caused in said fiber by said pump signal.

*Fig. 1*

*Fig. 2*

EP 1 508 985 A1

## DOCUMENTS CONSIDERED TO BE RELEVANT

| | European Patent Office | EUROPEAN SEARCH REPORT | | Application Number |
|---|---|---|---|---|
| | | | | EP 03 29 2070 |

| Category | Citation of document with indication, where appropriate, of relevant passages | Relevant to claim | CLASSIFICATION OF THE APPLICATION (Int.Cl.7) |
|---|---|---|---|
| X | US 6 452 716 B1 (PARK DAVID W ET AL) 17 September 2002 (2002-09-17) * column 2, line 43 - column 3, line 51; figures 4,5 * --- | 1-12 | H04B10/17 |
| X | EP 1 284 528 A (NORTEL NETWORKS) 19 February 2003 (2003-02-19) * page 3, line 5 - line 50; figure 8 * ----- | 1-12 | |

TECHNICAL FIELDS SEARCHED (Int.Cl.7)

H04B

The present search report has been drawn up for all claims

| Place of search | Date of completion of the search | Examiner |
|---|---|---|
| MUNICH | 22 January 2004 | Shaalan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

7

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2004

| Patent document cited in search report | | Publication date | Patent family member(s) | | Publication date |
|---|---|---|---|---|---|
| US 6452716 | B1 | 17-09-2002 | WO | 0230016 A2 | 11-04-2002 |
| | | | CA | 2421711 A1 | 11-04-2002 |
| | | | EP | 1325573 A2 | 09-07-2003 |
| EP 1284528 | A | 19-02-2003 | US | 2003123133 A1 | 03-07-2003 |
| | | | CA | 2394585 A1 | 25-01-2003 |
| | | | EP | 1284528 A2 | 19-02-2003 |

EPO FORM P0459

For more details about this annex : see Official Journal of the European Patent Office, No. 12/82